# EUROPEAN PATENT SPECIFICATION

(11) **EP 1 912 547 B1**
(45) Date of publication and mention of the grant of the patent: **07.12.2016**
(21) Application number: 06780194.4
(22) Date of filing: 25.07.2006
(51) Int. Cl.: A47J 43/07

(54) **FOOD PROCESSING DEVICE**
NAHRUNGSMITTELVERARBEITUNGSVORRICHTUNG
ROBOT CULINAIRE

(30) Priority: 04.08.2005 EP 05107199
(43) Date of publication of application: 23.04.2008
(73) Proprietor: Koninklijke Philips N.V., 5656 AE Eindhoven (NL)
(72) Inventor: OBERSTEINER, Heimo, NL-5656 AA Eindhoven (NL)
(74) Representative: Damen, Daniel Martijn
(86) International application number: PCT/IB2006/052540
(87) International publication number: WO 2007/015189

(56) References cited:
- EP-A- 1 151 708
- WO-A-96/10943
- US-A1- 2003 007 418

## Description

The present invention relates to a food processing device comprising a container comprising a central shaft fixedly mounted on the container bottom, a lid covering the container, and a processing tool unit supporting a food processing tool, its upper end being couplable with a drive unit through the lid, its lower end having an elongated cavity for rotatably engaging with the central shaft and allowing for pivotal movement about the axes of the central shaft. In particular, it relates to a food processing device working with high speed rotation, like for chopping.

Food processing devices are subjected to strict safety regulations, especially if they operate with dangerous tools like blades. Usually, the processing of food by e.g. kitchen appliances is based on a rotational movement of a tool. By rotating a blade or a set of blades, or a disk with a set of blades, food is chopped, cut, grated, mixed, blended etc.. If the appliance is switched off, the tool continues to rotate with quite high speed due to inertia. Thus, the user could still injure himself.

Most food processing devices have a container with a lid, the tool operating inside the container, to avoid food splashing outside the container during processing. To get approval such devices have to fulfill inter alia the safety regulation IEC: 2002 - 60335-2-14/Part 20.112, according to which the cutting blade of a food processor shall stop within 1,5, seconds after the lid has been opened or removed - even without load and at the highest speed.

In WO 02/32278 A1 a kitchen appliance meeting this requirement has been described. The kitchen appliance has a container, a cover for the container, and a tool drive means, which is accommodated in the container and rotatably supported in the container with the aid of bearing means, which allow a pivotal movement about the vertical axis in case the cover is removed. In the center of its bottom wall the container has a bearing pin rotatably supporting the tool drive means. The tool driving means has a bearing means for cooperation with the bearing pin. The bearing means has a bearing cap, which changes into a flared central bearing rim. The bearing cap has a shape, which slightly widens toward the central bearing rim, as a result of which the bearing means is clear of the bearing pin, thus allowing the tool drive means to perform a limited pivotal movement about the bearing pin. The tool drive means is equipped with a brake ring made of rubber and facing the bottom wall of the container. During the pivotal movement the brake ring gets in contact with the bottom wall of the container and produces a very rapid and effective braking action at regular speed of a kitchen appliance, e.g. around 3000

Another appliance of this type is described in US 2003/0007418 A1.

In case of appliances dedicated to specific kinds of processing such as chopping, much higher speeds are used, normally ca. 12000-15000 rpm, for higher efficiency. The centrifugal forces are so strong that the brake ring has no effect, and the tool drive means is ejected from the bearing pin. This is very dangerous for the user, as the tool drive means may even be ejected form the container when removing the cover. Besides, the tool drive means may damage the other parts of the appliance.

It is an object of the present invention to provide a food processing device decelerating very fast, when pivotal movement around the central shaft is allowed by e.g. removing the lid.

This object is achieved by a food processing device comprising a container comprising a central shaft fixedly mounted on the container bottom, a lid covering the container, and a processing tool unit supporting a food processing tool, its upper end being couplable with a drive unit through the lid, its lower end having an elongated cavity for rotatably engaging with the central shaft and allowing for pivotal movement about the axis of the central shaft, wherein a bearing part is provided inside the cavity, the bearing part having a predetermined shape on its inner surface for jamming with the central shaft during the pivotal movement.

Surprisingly, it has been found that the best braking action at very high rotational speed can be achieved by providing means for canting the processing tool unit against the central shaft to provoke a jamming, instead of relying on friction over a large surface and due to materials with a high coefficient of friction, as known for lesser rotational speed. As soon as the pivotal movement of the processing tool device with respect to the central shaft begins, e.g. due to removal of the lid, the bearing part of the processing tool device cants against the central shaft, thus leading to an immediate jamming. Thanks to this kind of braking, the processing tool unit stops within 1,5 seconds after the beginning of the pivotal movement - even at high speeds of 12000-15000 rps.

According to the present invention, the bearing part comprises a two edge contact zone, both its edges being in contact with the central shaft during the pivotal movement. It has been found out that a jamming during pivotal movement can be very efficiently provoked by providing two edges at the bearing part, both edges canting against the central shaft. The arrangement of the two edges can be chosen depending on the length of the central shaft and the elongated cavity as well as the pivoting angle. A very preferred arrangement is to have two concentric edges running around the central shaft to get a jamming in every canting position.

The two edge contact zone is cylindrical. The upper and the lower edge of the cylinder are the edges for jamming during pivoting movement. During regular rotation of the processing tool unit, i.e. during processing operation, the cylindrical two edge contact zone acts as bearing for the central shaft. During regular operation, the processing tool unit is centered by coupling means, which are part of the lid or reach through the lid, and couple the processing tool unit with a drive unit. Due to the processing tool unit being centered, there is no canting and a smooth rotation is even enhanced by the bearing provided by the cylindrical part between the two edges.

Preferably, the two edge contact zone is located in the lower half of the elongated cavity. This allows for a larger pivoting angle as well as for a faster and more efficient canting and jamming, thus for a faster stopping of the processing tool unit. In case of a cylindrical two edge contact zone, the stability during regular rotation is further improved.

The bearing part has upper and lower tapered zones on its inner surface in direction to the two edge contact zone, as a smooth inner surface can be more easily cleaned.

In preferred embodiments of the present invention, the cavity further contains a part made of an elastic material to attenuate the noise during canting and jamming.

The central shaft and the cavity are preferably dimensioned such that at least one third of the processing tool unit encompasses the central shaft to increase the stability during regular rotation and to better avoid a random ejection of the processing tool unit during the pivotal movement.

The tool for processing food is advantageously arranged on the lower end of the processing tool unit. This lowers the center of gravity of the processing tool unit and enhances stability during rotation and helps avoiding a random ejection of the processing tool unit during the pivotal movement.

In preferred embodiments of the present invention, the tool for processing food is a chopping blade. Other possible tools are e.g. disks for grating or rasping.

The best results have been achieved by using a central shaft made of metal and a bearing part made of plastic material, i.e. a pair of materials having a low coefficient of friction when coming into contact.

A detailed description of the invention is provided below. Said description is provided by way of a non-limiting example to be read with reference to the attached drawings in which:
Fig. 1 shows a cut through a food processing device according to the present invention with the lid covering the container;
Fig. 2 shows a cut through the food processing device of Figure 1 with removed lid;
Fig. 3 shows as enlarged detail the lower part of the food processing device of Fig. 1; and
Fig. 4 shows as enlarged detail the lower part of the food processing device of Fig. 2.

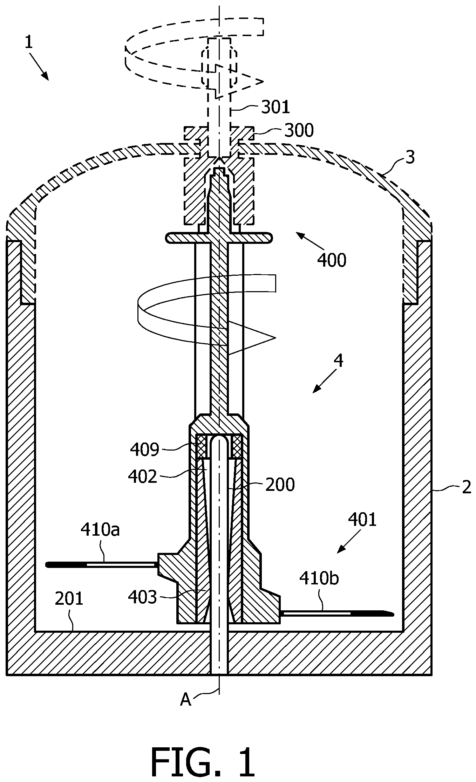

The invention will be explained further in detail with reference to a chopper 1 as illustrated in Figure 1.

The chopper 1 includes a container 2 to accommodate the food to be chopped, e.g. nuts, herbs, vegetables etc.. During operation, the container 2 is covered by a lid 3 to avoid food to be ejected form the container 2. In the middle of the bottom wall 201 of the container 2, a central shaft 200 made of steel is provided, over which a processing tool unit 4 is slipped.

At its lower end 401, the processing tool unit 4 has chopping blades 410a,b. The upper end 400 is designed to be coupled to some drive unit (not shown). The drive unit may be a dedicated drive unit or a drive unit that can be used with other food processing device, too. In the present example, the coupling is achieved with help of two coupling elements 300, 301. The coupling element 300 is inserted in the lid 3 and accommodates coupling element 301 to the drive unit. The upper end 400 of the processing tool unit 4 is inserted in coupling element 300. While the upper end 400 of the processing tool unit 4 is inserted in coupling element 300, the processing tool unit 4 is centered with axis A and standing upright, thus allowing for high speed rotation around axis A up to 15000 rpm for chopping.

The lower part 401 of the processing tool unit 4 has an elongated cavity 402 for inserting the central shaft 200. The dimensions of the cavity 402 and the central shaft 200 are such that 40% of the total length of the processing tool unit 4 encompasses the central shaft 200 to improve stability during rotation and avoid having the processing tool unit 4 ejected and damaging other parts of the chopper 1 during pivotal movement.

Stability during rotation is further improved by having the chopping blades 410a,b arranged at the lower end 401 of the processing tool unit 4, thus moving the center of gravity of the processing tool unit 4 to the region encompassing the central shaft 200. Besides, the food is processed more efficiently, if the chopping blades 410a,b are near to the container bottom 201, especially it there are only small amounts of food. It will be noted that in case of a food processing device using e.g. a disk for rasping, cutting or grating, the disk would be located such that there is enough place under the disk for the processed food. Eventually, the central shaft 200 and the elongated cavity 402 would be even longer.

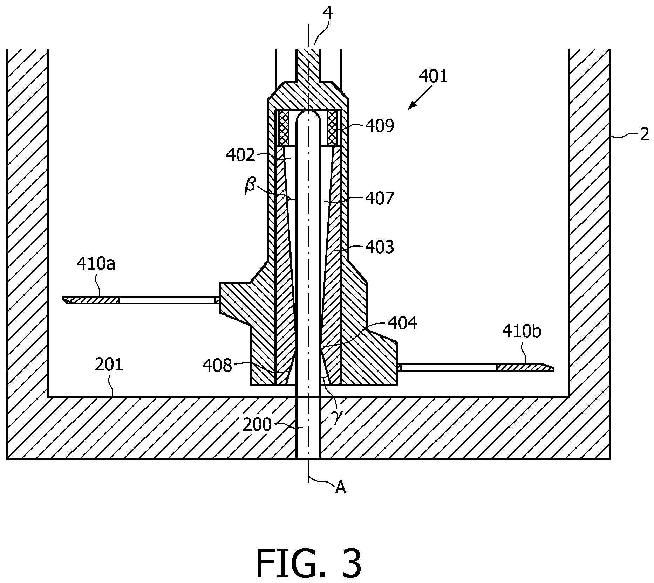

The elongated cavity 402 comprises a bearing part 402 made of hard plastic material admitted for use with food such as ABS (Acrylonitrile Butadiene Styrene) to provide a low coefficient of friction with the steel central shaft 200. The bearing part 403 has a predetermined shape on its inner surface for jamming with the central shaft during the pivotal movement. This is shown more in detail in Figure 3.

The bearing part 403 of the present example has three zones 404, 407, 408. The actual function of bearing the central shaft 200 is fulfilled by the cylindrical two edge contact zone 404. This zone 404 is arranged in the lower third of the bearing part 403 to increase stability during rotation and allow a pivotal movement. Adjacent to the cylindrical two edge contact zone 404 are a lower tapered zone 408 with a tapering angle γ and an upper tapered zone 407 with a tapering angle β. This leads to a smooth inner surface of the bearing part 403 being easier to clean and improving the stability of the bearing part 403 itself. The lower tapered zone 408 helps to slip the processing tool unit 4 over the central shaft 200.

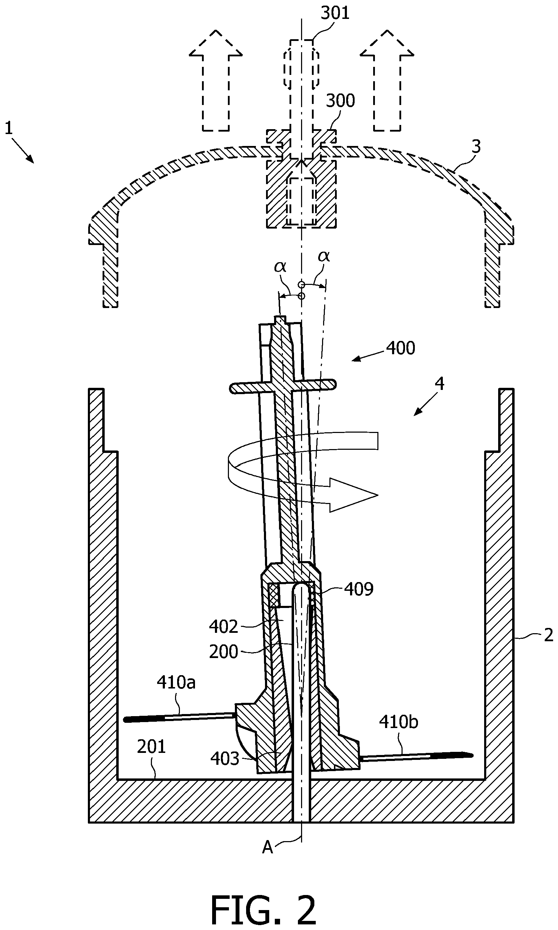

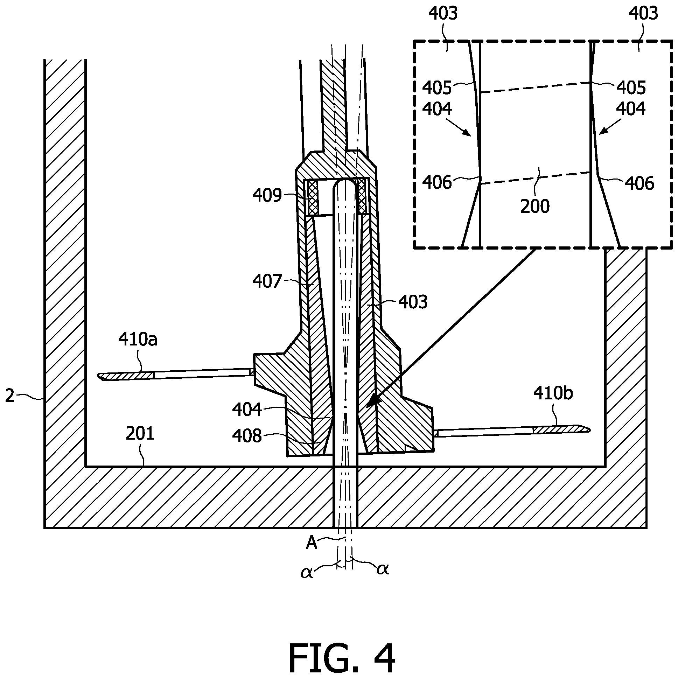

If the lid 3 is removed from the container 2, as illustrated in Figure 2, not only is the processing tool unit 4 not driven to rotation any more, but also is a pivotal movement with pivoting angle α around axis A possible, as is shown more in detail in Figure 4. Due to inertia, the processing tool unit 4 continues to rotate with very high speed and simultaneously pivots with pivoting angle α. The pivoting angle α is defined by the inner diameter of a rubber ring 409 located over the bearing part 403, and the position and height of the cylindrical two edge contact zone 404. The height of the cylindrical two edge contact zone 404 is chosen such that on the one hand, it has a bearing function for the centrals shaft 200 during rotation, and on the other hand, it does still allow a pivotal movement, as soon the lid 3 with the centering coupling element 300 is removed.

It will be noted that the tapering angles β, γ are larger than the pivoting angle α to not influence the pivotal movement except by the two edges 405, 406 (see insert in Figure 4): Due to the pivotal movement, the bearing part 403 cants against the central shaft 200. The central shaft 200 then gets kind of clamped between the upper edge 405 on the one side and the lower edge 406 on the other side. This leads to a jamming and a stopping of the processing tool unit 4 within 1,5 seconds even if the rotational speed was as high as 12000-15000 rpm. The time the user has removed the lid and put it aside, the processing tool unit 4 stands still and can be removed for cleaning and for emptying the container 2, without danger of being injured or of the processing tool unit 4 being ejected and damaging other parts of the chopper.

During the pivotal movement, the upper end of the central shaft 200 hitting against the inner wall of the elongated cavity 402 may cause annoying noise. To dampen this noise, the rubber ring 409 is provided inside the elongated cavity 402 above the bearing part 403. Instead of rubber, any other elastic material may be utilized.

### LIST OF REFERENCE NUMERALS:

- 1: chopper
- 2: container
- 3: lid
- 4: processing tool unit
- 200: central shaft
- 201: container bottom
- 300: lid coupling element
- 301: drive unit coupling element
- 400: upper end
- 401: lower end
- 402: elongated cavity
- 403: bearing part
- 404: two edge contact zone
- 405: upper edge
- 406: lower edge
- 407: upper tapered zone
- 408: lower tapered zone
- 409: rubber part
- 410a,b: chopping blade
- A: central axis
- α: pivoting angle
- β: upper tapering angle
- γ: lower tapering angle

## Claims

1. A food processing device (1) comprising:
- a container (2) comprising a central shaft (200) fixedly mounted on the container bottom (201);
- a lid (3) covering the container (2);
- a processing tool unit (4) supporting a food processing tool (410a,b), its upper end (400) being couplable with a drive unit through the lid (3), its lower end (401) having an elongated cavity (402) for rotatably engaging with the central shaft (200) and allowing for pivotal movement about the axis (A) of the central shaft (200), the elongated cavity (402) being provided with a bearing part (403)
**characterized in that**,
the bearing part (403) comprises on its inner surface a cylindrical two edge contact zone (404) adjacent to an upper tapered zone (407) and a lower tapered zone (408) in direction of the two edge contact zone (404) for jamming with the central shaft (200) during the pivotal movement, such that, during use, as soon as the pivotal movement of the processing tool unit (4) with respect to the central shaft (200) begins, e.g. due to removal of the lid (3), the bearing part (403) of the processing tool unit (4) cants against the central shaft (200), wherein both edges (405, 406) of the two edge contact zone (404) being in contact with the central shaft (200) during the pivotal movement, said edges (405, 406) being axially spaced along the bearing part (403).

2. The food processing device according to claim 1 or 2, **characterized in that** the two edge contact zone (404) is located in the lower half of the elongated cavity (402).

3. The food processor device according to any of claims 1 to 2 , **characterized in that** the cavity (402) further contains a rubber part (409).

4. The food processor device according to any of claims 1 to 3 , **characterized in that** the central shaft (200) and the cavity (402) are dimensioned such that one third of the processing tool unit (4) encompasses the central shaft (200).

5. The food processor device according to any of claims 1 to 4 , **characterized in that** the tool (410a,b) for processing food is arranged on the lower end (401) of the processing tool unit (4).

6. The food processor device according to any of claims 1 to 5 , **characterized in that** the tool for processing food is a chopping blade (410a,b).

7. The food processor device according to any of claims 1 to 6 , **characterized in that** the central shaft (200) is made of metal and the bearing part (403) is made of plastic material.

## Patentansprüche

1. Nahrungsmittelverarbeitungsvorrichtung (1), folgendes umfassend:
- einen Behälter (2), eine mittige Welle (200) umfassend, die fest auf dem Behälterboden (201) montiert ist;
- einen Deckel (3), der den Behälter (2) abdeckt;
- eine Verarbeitungswerkzeugeinheit (4), welche ein Nahrungsmittelverarbeitungswerkzeug (410a,b) trägt, deren oberes Ende (400) durch den Deckel (3) hindurch mit einer Antriebseinheit verbunden werden kann, deren unteres Ende (401) einen länglichen Hohlraum (402) aufweist, um drehbar in die mittige Welle (200) einzugreifen, und eine Drehbewegung um die Achse (A) der mittigen Welle (200) zu ermöglichen, wobei der längliche Hohlraum (402) mit einem Lagerteil (403) versehen ist,
**dadurch gekennzeichnet, dass**
das Lagerteil (403) an seiner Innenfläche eine zylindrische zweikantige Kontaktzone (404) an eine obere abgeschrägte Zone (407) angrenzend umfasst, sowie eine untere abgeschrägte Zone (408) in Richtung der zweikantigen Kontaktzone (404) zum Klemmen an der mittigen Welle (200) während der Drehbewegung, sodass das Lagerteil (403) der Verarbeitungswerkzeugeinheit (4) während des Betriebs, sobald die Drehbewegung der Verarbeitungswerkzeugeinheit (4) im Verhältnis zur mittigen Welle (200), z.B. aufgrund der Entfernung des Deckels (3) beginnt, zur mittigen Welle (200) kippt, wobei beide Kanten (405, 406) der zweikantigen Kontaktzone (404) während der Drehbewegung in Kontakt mit der mittigen Welle (200) stehen, und die besagten Kanten (405, 406) im Abstand axial entlang des Lagerteils (403) angeordnet sind.

2. Nahrungsmittelverarbeitungsvorrichtung nach Anspruch 1 oder 2, **dadurch gekennzeichnet, dass** sich die zweikantige Kontaktzone (404) in der unteren Hälfte des länglichen Hohlraums (402) befindet.

3. Nahrungsmittelverarbeitungsvorrichtung nach irgendeinem der Ansprüche 1 bis 2, **dadurch gekennzeichnet, dass** der Hohlraum (402) darüber hinaus ein Gummiteil (409) enthält.

4. Nahrungsmittelverarbeitungsvorrichtung nach irgendeinem der Ansprüche 1 bis 3, **dadurch gekennzeichnet, dass** die mittige Welle (200) und der Hohlraum (402) derart bemessen sind, dass ein Drittel der Verarbeitungswerkzeugeinheit (4) die mittige Welle (200) umfasst.

5. Nahrungsmittelverarbeitungsvorrichtung nach irgendeinem der Ansprüche 1 bis 4, **dadurch gekennzeichnet, dass** das Werkzeug (410a,b) zur Nahrungsmittelverarbeitung am unteren Ende (401) der Verarbeitungswerkzeugeinheit (4) angeordnet ist.

6. Nahrungsmittelverarbeitungsvorrichtung nach irgendeinem der Ansprüche 1 bis 5, **dadurch gekennzeichnet, dass** das Werkzeug zur Nahrungsmittelverarbeitung eine Hackklinge (410a,b) ist.

7. Nahrungsmittelverarbeitungsvorrichtung nach irgendeinem der Ansprüche 1 bis 6, **dadurch gekennzeichnet, dass** die mittige Welle (200) aus Metall gefertigt ist und das Lagerteil (403) aus Kunststoffinaterial gefertigt ist.

## Revendications

1. Dispositif de transformation culinaire (1) comprenant :
- un récipient (2) contenant une tige centrale (200) montée de manière fixe sur le fond (201) du récipient ;
- un couvercle (3) recouvrant le récipient (2) ;
- une unité d'outil de transformation (4) supportant un outil de transformation culinaire (410a,b), son extrémité supérieure (400) pouvant être couplée à une unité d'entraînement à travers le couvercle (3), son extrémité inférieure (401) ayant une cavité allongée (402) pour s'engager de manière rotative avec la tige centrale (200) et permettant un déplacement pivotant autour de l'axe (A) de la tige centrale (200), la cavité allongée (402) étant pourvue d'une partie de roulement (403),
**caractérisé en ce que**,
la partie de roulement (403) comprend sur sa surface intérieure une zone de contact cylindrique à deux bords (404) adjacente à une zone supérieure conique (407) et une zone inférieure conique (408) dans une direction de la zone de contact à deux bords (404) pour se bloquer avec la tige centrale (200) durant le déplacement pivotant, de telle sorte que, durant l'utilisation, dès que le déplacement pivotant de l'unité d'outil de transformation (4) par rapport à la tige centrale (200) commence, par exemple en raison du retrait du couvercle (3), la partie de roulement (403) de l'unité d'outil de transformation (4) s'incline contre la tige centrale (200), dans lequel les deux bords (405, 406) de la zone de contact à deux bord (404) sont en contact avec la tige centrale (200) durant le déplacement pivotant, lesdits bords (405, 406) étant axialement espacés le long de la partie de roulement (403).

2. Dispositif de transformation culinaire selon la revendication 1 ou 2, **caractérisé en ce que** la zone de contact à deux bords (404) se situe dans la moitié inférieure de la cavité allongée (402).

3. Dispositif de transformation culinaire selon l'une quelconque des revendications 1 à 2, **caractérisé en ce que** la cavité (402) contient en outre une partie en caoutchouc (409).

4. Dispositif de transformation culinaire selon l'une quelconque des revendications 1 à 3, **caractérisé en ce que** la tige centrale (200) et la cavité (402) sont dimensionnées de telle sorte qu'un tiers de l'unité d'outil de transformation (4) englobe la tige centrale (200).

5. Dispositif de transformation culinaire selon l'une quelconque des revendications 1 à 4, **caractérisé en ce que** l'outil (410a,b) destiné à transformer la nourriture est agencé sur l'extrémité inférieure (401) de l'unité d'outil de transformation (4).

6. Dispositif de transformation culinaire selon l'une quelconque des revendications 1 à 5, **caractérisé en ce que** l'outil destiné à transformer la nourriture est une lame de hachage (410a,b).

7. Dispositif de transformation culinaire selon l'une quelconque des revendications 1 à 6, **caractérisé en ce que** la tige centrale (200) se compose de métal et la partie de roulement (403) se compose d'une matière plastique.
